# EUROPEAN PATENT SPECIFICATION

(11) **EP 3 480 403 B1**
(45) Date of publication and mention of the grant of the patent: **14.10.2020**
(21) Application number: 18201818.4
(22) Date of filing: 22.10.2018
(51) Int. Cl.: E05F 11/48

(54) **WINDOW LIFTER ASSEMBLY AND MANUFACTURING METHOD**
FENSTERHEBERANORDNUNG UND HERSTELLUNGSVERFAHREN
ENSEMBLE LÈVE-VITRE ET PROCÉDÉ DE FABRICATION

(30) Priority: 01.11.2017 IN 201721038949
(43) Date of publication of application: 08.05.2019
(73) Proprietor: Brose Fahrzeugteile SE & Co. Kommanditgesellschaft, Bamberg, 96052 Bamberg (DE)
(72) Inventor: PRABHAKAR, Varun, 411017 Pune (IN); BRAVE, Adarsh, 412101 Pune (IN); ROTE, Amit, 411014 Pune (IN)
(74) Representative: Maikowski & Ninnemann Patentanwälte Partnerschaft mbB

(56) References cited:
- EP-A1- 1 105 610
- WO-A1-2009/141401
- DE-A1- 10 144 777

## Description

### FIELD

The present invention relates to a window lifter assembly as well as to a method for manufacturing a window lifter assembly.

### BACKGROUND

Window lifter assemblies for adjusting a vehicle window are already well-known, e.g., from EP 1 105 610 A1. Such window lifter assemblies may comprise a flexible traction element for transmitting an adjustment force to adjust the vehicle window. For example, the flexible traction element may comprise a rope, cable, wire or belt and may be connected to a drive unit as well as to at least one slider of the window lifter assembly to which the vehicle window is fixed. Upon actuation of the drive unit the at least one slider is displaced. The at least one slider may thus move the vehicle window up and down upon actuation of the drive unit, which drive unit for example comprises an electric drive motor. For guiding the flexible traction element typically several guiding elements are provided, for example in the form of rotatably mounted pulleys or immovable guiding pieces.

At a guiding element of the window lifter assembly the flexible traction element is guided from a first direction towards a second direction. The guiding element is mounted at a carrier member, typically made of plastic material. For example, due to the guiding element the flexible traction element is deflected about more than 90° at an end of a carrier member in the form of a guide rail of the window lifter assembly. Given that relatively high forces are exerted on a guiding element in use of the window lifter assembly (when adjusting the vehicle window) a reinforcement member may be arranged at a mounting region of the carrier member at which a guiding element is located.

For example, WO 2009/141401 A1 discloses a window lifter assembly comprising a carrier member in the form of component carrier with integrally formed guiding rails to which a separate metal reinforcement member is mounted carrying a guiding element in the form of a rotatably mounted pulley. The carrier member comprises a support structure on which the reinforcement member abuts so that forces exerted on the reinforcement member via the guiding element may be directly transferred to the carrier member. In WO 2009/141401 A1 a pulley is fixed to the reinforcement member by a fastening element, e.g., a screw or bolt, which may fix the reinforcement member to the carrier member. A reinforcement member may furthermore be pre-mounted with the pulley so that the pulley and the reinforcement element may be attached to the carrier member in a single process step.

Based on this prior art a solution shall be provided due to which assembly of a window lifter assembly may be further facilitated.

### SUMMARY

A window lifter assembly for adjusting are vehicle window is a proposed, which assembly comprises:
- a flexible traction element for transmitting an adjustment force to adjust the vehicle window;
- a guiding element at which the flexible traction element is guided from a first direction towards a second direction;
- a carrier member made of plastic material and comprising a mounting region for the guiding element; and
   - a reinforcement member made of a different material than the carrier member, which reinforcement member carries the guiding element and is at least partially embedded in the plastic material of the carrier member at the mounting region,
wherein the reinforcement member comprises a base portion to which the guiding element is fixed and which is located in a carrier opening in the carrier member.
At least partially embedding the reinforcement member in the plastic material of the carrier member in particular includes enclosing and/or surrounding at least a portion of the reinforcement member by the plastic material of the carrier member. In one embodiment of form-fit connection between the reinforcement member and the carrier member is provided thereby due to which the reinforcement member is held at the carrier member in such a manner that the reinforcement member cannot be removed from the carrier member in a nondestructive manner, i.e., without breaking and thus destroying the carrier member (at the mounting region). The proposed window lifter assembly hence in particular includes that the reinforcement member is at least partially molded in the plastic material of the carrier member. The reinforcement member may be integrated in the carrier member so that the reinforcement member needs not to be mounted as a separate component to the molded carrier member, which for example may be a guide rail or a component carrier of the window lifter assembly. Or in other words: The carrier member can thus be prefabricated with the reinforcement member which, given that the reinforcement element is at least partially embedded in the plastic material of the carrier member, constitutes an integral element of the carrier member not requiring separate assembly to the carrier member, for example, after molding the carrier member.

According to the invention, the reinforcement member comprises a base portion to which the guiding element is fixed and which is located in a carrier opening in the carrier member. For example, a disk-shaped base portion may be formed by the reinforcement member who is located in the carrier opening, in particular in a circular carrier opening of the carrier member (whereas the carrier opening may generally be also of another shape). In one embodiment the base portion to which the guiding element is fixed is accessible from two different (front and rear) sides of the carrier member. The base portion can thus be located in through hole in the carrier member.

The base portion of the reinforcement member may comprise a fastening hole for fixing the guiding element to the reinforcement member. Such fastening hole may for example be provided for a rivet, bold or screw fixing the guiding element to the reinforcement member who forms an integral part of the carrier member.

In an exemplary embodiment, the reinforcement member comprises at least one portion projecting from the base portion in a direction radial to a center of the carrier opening and being embedded in the plastic material of the carrier member. The reinforcement member may for example comprise at least one of a tab portion and web portion projecting from the base portion in a direction radial to the center of the carrier opening ensuring fixation of the reinforcement member in the plastic material of the carrier member. The at least one portion projecting radially from the base portion may therefore be embedded in the plastic material so that the reinforcement member is locally embedded in the plastic material at defined sections of the reinforcement member formed by those radially projecting portions.

The at least one portion of the reinforcement member may comprise at least one connecting opening through which the plastic material of the carrier member extends. In such an embodiment the connecting opening may for example be filled with plastic material. Generally, plastic material reaching through the connecting opening at a portion embedded in the plastic material of the carrier member encloses an outer edge section of the at least one portion which outer edge section borders the at least one connecting opening. Thereby, the reinforcement member is irremovably held by a form-fit connection at the carrier member.

In one exemplary embodiment, the reinforcement member comprises at least two portions projecting in different directions radially with respect to the center of the carrier opening. Each portion may be embedded in the plastic material of the carrier member in order to provide a form-fit connection to the carrier member at different sections of the reinforcement member.

In one exemplary embodiment, the reinforcement member comprises a portion extending substantially perpendicular to a resulting force which, in use of the window lifter assembly, is exerted on the guiding element upon guiding the flexible traction element from the first to the second direction. The resulting force may thus be applied to the guiding element upon adjusting the vehicle window by the window lifter assembly. The portion extending substantially perpendicular to this resulting force may be provided for providing (additional) support and transmission of the resulting force to the carrier member. For example, the guiding element is it to be mounted to the carrier member (in which the reinforcement member is at least partially embedded) along a mounting axis, wherein the mentioned portion extends substantially in parallel to this mounting axis and thus axially with respect to the mounting axis. The mounting axis may also be parallel to a pivot axis about which a guiding element in the form of pulley is rotatably mounted at the reinforcement member. Naturally, a portion extending substantially perpendicular to the resulting force may also radially project from a base portion of the reinforcement member.

A portion of the reinforcement member, in particular a projecting portion may further be embedded in the plastic material of a support structure of the carrier member. Such a support structure may for example be formed above and/or below a fastening hole provided at the reinforcement member for fixing the guiding element to the reinforcement member. At least one support structure of the carrier member may project on at least one side of the carrier member from a base plane of the carrier member.

In an exemplary embodiment, the support structure of the carrier member extends along a longitudinal direction in which, in use of the window lifter assembly, a resulting force is exerted on the guiding element upon guiding the flexible traction element from the first direction towards the second direction. Referring to the above mentioned mounting axis or pivot axis (for a rotatably mounted pulley as the guiding element) the support structure may for example extend substantially perpendicular to such a mounting axis and/or such a pivot axis. The support structure may be of elongated form. The support structure may be provided for absorbing forces exerted on the guiding element upon adjusting the vehicle window by means of the window lifter assembly which forces are applied to the support structure via the reinforcement member carrying the guiding element.

In one embodiment the support structure projects at a first side of the carrier member and defines a recessed portion at a second side of the carrier member. The first and second sides of the carrier member may face away from each other and may thus define front and rear sides of the carrier member. A front side may for example face a door outer panel and thus an exterior of the vehicle, whereas a rear side may face a trim panel and thus a vehicle interior (in particular in the case the carrier member is formed by a component carrier) or the rear side may face a component carrier to which the carrier member is fixed (in case the carrier member is for example formed by a guide rail).

In one exemplary embodiment, a stiffening structure is provided in the recessed portion at the second side of the carrier member. The stiffening structure may provide for (additional) support for the reinforcement member at the carrier member. In particular, the stiffening structure may increase stiffness at the mounting region of the carrier member. For this purpose, the stiffening structure may comprise at least one rib. The at least one rip may be part of a rib structure comprising several ribs. The at least one rib may extend from an outer wall of a portion of the support structure of the carrier member in which portion of the support structure at least a portion of the reinforcement element is embedded. The stiffening structure may be integrally formed at the carrier member and may thus be made of the plastic material as well.

In one exemplary embodiment, the reinforcement member is made of metal. For example the reinforcement member is a metal bracket, in particular a metal pulley bracket. Accordingly, the guiding element may be a pulley being rotatably mounted to the reinforcement element for guiding the flexible traction member from the first direction towards the second direction.

In an exemplary embodiment, the carrier member is at least one of a guide rail and a component carrier of the window lifter assembly. For example, the guide rail may be a separate component mounted to a component carrier or an integral part of such a component carrier. In the latter case the component carrier integrates the guide rail which is thus formed by a portion of the component carrier. Generally, a component carrier of a window lifter assembly may carry or integrate (further) functional components of the window lifter assembly or of a vehicle door, like a guide rail or a loudspeaker.

Another aspect of the proposed solution relates to a method for manufacturing a window lifter assembly for adjusting a vehicle window. The proposed manufacturing method comprises at least the following steps:
- molding a carrier member of the window lifter assembly from plastic material, the carrier member comprising a mounting region for a guiding element of the window lifter assembly at which a flexible traction element of the window lifter assembly is to be guided from a first direction towards a second direction; and
- at least partially embedding a reinforcement element, made of a different material than the plastic material of the carrier member, in the plastic material when molding the carrier member the reinforcement member comprising a base portion to which the guiding element is fixed and which is located in a carrier opening in the carrier member.

According to the invention, the reinforcement member is arranged in a mold into which melted plastic material is inserted for molding the carrier member. For example, the carrier member (with the reinforcement member at least partially embedded therein) is manufactured by injection molding.

In particular when manufacturing the carrier member by injection molding the reinforcement member which is to be arranged in the mold, comprises at least one connecting opening through which melted plastic material is allowed to flow. Thereby, the reinforcement member is integrated into the carrier member after cooling and the reinforcement member cannot be removed from the carrier member without destroying or at least breaking carrier member in the area or region where at least a portion of the reinforcement member is embedded in the plastic material.

The method may further comprise fixing the guiding element to the reinforcement member being at least partially embedded in the plastic material of the molded carrier member. Accordingly, the carrier member is firstly molded with the reinforcement member at least partially embedded therein before the guiding element is fixed to the reinforcement member (and thus to the carrier member integrating the reinforcement member).

In one exemplary embodiment, the method for manufacturing the window lifter assembly may comprise manufacturing a window lifter assembly according to one of the embodiments stated above. For example, a carrier member may thus be molded with a support structure extending along the longitudinal direction in which a resulting force is exerted on the guiding element upon guiding the flexible traction element from the first direction towards the second direction in the use of the window lifter assembly (and thus upon displacing the vehicle window by the window lifter assembly). Such a support structure may extend substantially perpendicular to a mounting axis along which the guiding element is to be mounted to the carrier member. Further, the support structure may extend substantially perpendicular to a pivot axis about which a guiding element in the form of a pulley is to be rotatably mounted to the reinforcement member. As stated above, the mounting axis and the pivot axis may be parallel or even identical.

In one exemplary embodiment, a portion of the reinforcement member projecting from a base portion of the reinforcement member substantially parallel to the mounting and/or pivot axis may be (over-) molded by melted plastic material in order to embed this projecting portion of the reinforcement member in the plastic material.

In one exemplary embodiment, a stiffening structure for stiffening the mounting region of the carrier member may be molded during the manufacturing process of the window lifter assembly.

### BRIEF DESCRIPTION OF THE DRAWINGS

The previously mentioned and other advantages of the present solution will be apparent to those skilled in the art upon consideration of the following specification and the attached drawings.
FIGS 1A to 1B are views of first and second sides of a carrier member with an integrated reinforcement element of a window lifter assembly, wherein the carrier member is formed by a guide rail of the window lifter assembly.
FIG 2 is a cross-sectional view of the carrier member along the line A-A shown in FIG 1A.
FIG 3 is an enlarged perspective view on the second side of the carrier member showing a stiffening structure of the carrier member in greater detail.
FIG 4 is an exploded view on the carrier member with its reinforcement element.
FIG 5A is an exploded view of the carrier member, a guiding element in the form of our rotatably mounted pulley and a fastening element in the form of a rivet for fixing the pulley to the reinforcement member of the carrier member.
FIG 5B is a perspective view of the carrier member with the pulley mounted to carrier member.
FIG 6 is a perspective view on a second side of the carrier member according to another embodiment not comprising a stiffening structure.
FIG 7 is a perspective view on a first size of a carrier member in the form of a guide rail with an integrated reinforcement member according to another embodiment.
FIGS 8A to 8B are different views of the guide rail of FIG 7 focussing on the area where the reinforcement member is mounted.
FIG 9A is a side view of a window lifter assembly with two carrier elements being formed by two guide rails at which sliders - to be connected to a vehicle window - are mounted and may be displaced by a flexible traction element in the form of a cable which is guided by several pulleys of the window lifter assembly.
FIG 9B is a perspective view on a prior art pulley assembly comprising a reinforcement element to which a pulley is rotatably mounted and which may be fixed to carrier member of a window lifter assembly as shown in FIG 9A.

### DETAILED DESCRIPTION

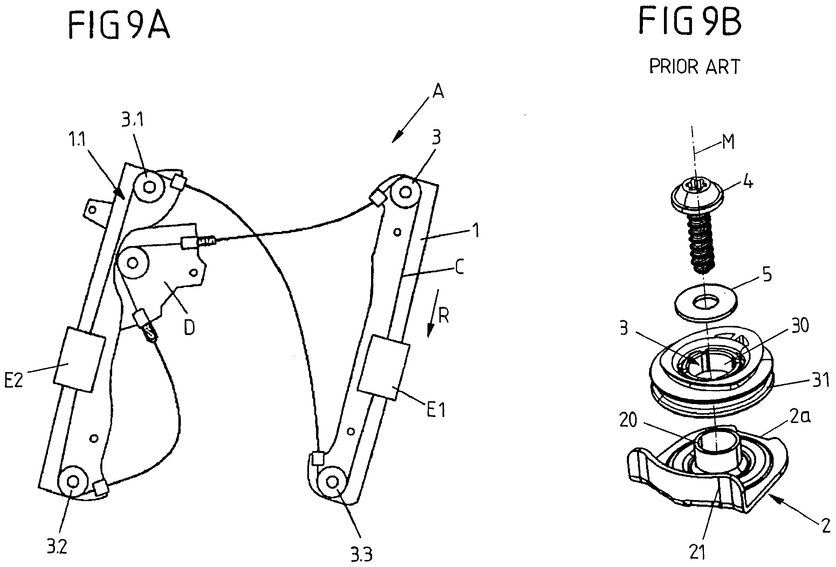

FIG 9A shows a window lifter assembly A comprising two carrier members in the form of guide rails 1 and 1.1. To each guide rail 1, 1.1 a slider E1, E2 is mounted which may be displaced along the respective guide rail 1 or 1.1 via a flexible traction element in the form of a cable C of the window lifter assembly A. The cable C is connected to each slider E1 and E2 and may be driven by a drive unit D comprising, for example, an electrical drive motor. A cable drum may be part of the drive unit D at which a portion of the cable C may be wound in order to synchronously displace the sliders E1 and E2 for adjusting a vehicle window connected to the sliders E1 and E2.

For guiding the cable C so that an adjusting force generated by the drive unit D and applied to the sliders E1 and E2 by the cable C results in a synchronous movement of the sliders E1 and E2 either up or down the two guide rails 1 and 1.1 several guiding elements in the form of rotatably mounted pulleys 3, 3.1, 3.2 and 3.3 are arranged at the two guide rails 1 and 1.1. In the embodiment shown in FIG 9A each guide rail 1 and 1.1 carries two pulleys 3, 3.3 or 3.1, 3.2 arranged at upper and lower ends of each guide rail 1 and 1.1.

Typically, the guide rails 1 and 1.1 are made from plastic material in order to save costs and weight. In use and in particular upon adjusting the vehicle window relatively high forces are exerted by the cable C on each pulley 3, 3.1, 3.2 and 3.3. A resulting force on each pulley 3, 3.1, 3.2, and 3.3 acts - depending on the direction of the movement of the sliders E1 and E2 and thus of the vehicle window - substantially along a direction of extent of the respective guide rail 1 or 1.1 and thus along a longitudinal direction R.

In view of those forces and the corresponding loads on the guide rails 1 and 1.1 at mounting regions at which a pulley 3, 3.3 or 3.1, 3.2 is mounted to guide rail 1, 1.1 it is known to arrange a reinforcement element 2 at each mounting region. FIG 9B shows such a reinforcement member in the form of a metal pulley bracket to as known from WO 2009/141401 A1. The metal pulley bracket 2 comprises a bracket base portion 20 from which a hollow bearing journal projects for rotatably mounting the pulley 3. The pulley 3 comprising a circumferentially extending guiding channel 31 for the cable C is plugged to the projecting hollow journal of the bracket base portion 20. The journal thereby engaging in a through hole 30 of the pulley 3.

For axially (with respect to a mounting axis M being identical to a pivot axis for the rotatable pulley 3) securing the pulley 3 at the pulley bracket 2 and at the respective carrier member, for example a guide rail 1, a fastening element in the form of a screw 4 is a provided. This screw 4 extends with its threaded portion through the through hole 30 of the pulley 3 and the hollow journal of the bracket base portion 20 so that the screw 4 may be screwed in the carrier member thereby fixing the pulley 3 and the pulley bracket 2 to the carrier member. An additional washer 5 may be provided below a screw head of the screw 4.

In order to arrange the pulley bracket 3 in a rotationally fixed manner at the carrier member an arresting recess 2a is formed at the bracket base portion 20. Into this arresting recess 2a formed at an outer circumference of the base portion 20 an arresting stud of the carrier member engages. Thereby, the pulley bracket 2 is blocked from rotation about the mounting/pivot axis M when duly mounted to the carrier member.

For transferring, in use of the window lifter assembly A, a force exerted from the pulley 3 to the carrier member, for example the guide rail 1, via the pulley bracket 2 the pulley bracket 2 comprises are tap portion 21 projecting substantially perpendicular from the bracket base portion 20. This tap portion 21 abuts on a support structure of the carrier member so that forces acting towards this tap portion 21 are directly applied to the support structure of the carrier member without affecting the carrier member in the area of the mounting/pivot axis M.

Whereas the solution as proposed in FIG 9B already results in an improvement regarding the transfer of forces from the cable C and the pulley 3 to the carrier member it may be desirable to further facilitate assembly and mounting of the window lifter assembly A.

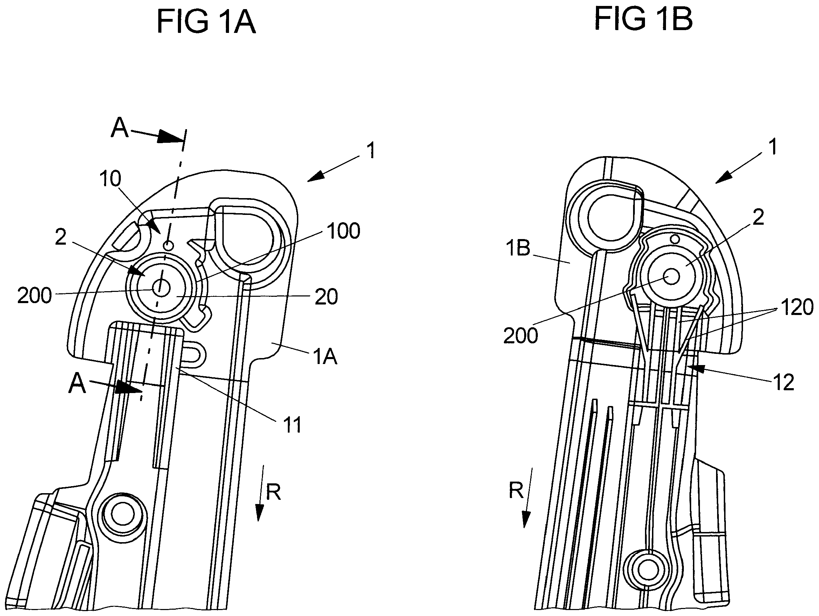

The embodiment shown in FIGS 1 to 5B provides for a window lifter assembly A in which a metal pulley bracket 2 is integrated in a guide rail 1 which is made of a plastic material. Here, the metal pulley bracket 2 is at least partially embedded in the plastic material of the guide rail 1. The metal bracket 2 may thus form an integral part of a the guide rail 1 which is molded and thus formed by the plastic material, thereby rendering it obsolete to separately mount the metal pulley bracket 2 and to fasten it to the guide rail 1.

In FIGS 1A and 1B an upper end of the guide rail 1 is shown. Whereas FIG 1A shows a front side 1A of the guide rails 1, FIG 1B shows a rear side 1B of the guide rail 1. The guide rail 1 is made from plastic material integrating the metal pulley bracket 2 of which a base portion 20 is located in an opening 100 of a pulley mounting region 10 of the guide rail 1. The base portion 20 at which a pulley 3 is to be mounted is disc-shaped. Due to the (carrier) opening 100 in the guide rail 1 the disc-shaped base portion 20 of the pulley bracket 2 is accessible at both front and rear sides 1A, 1B of the guide rail 1.

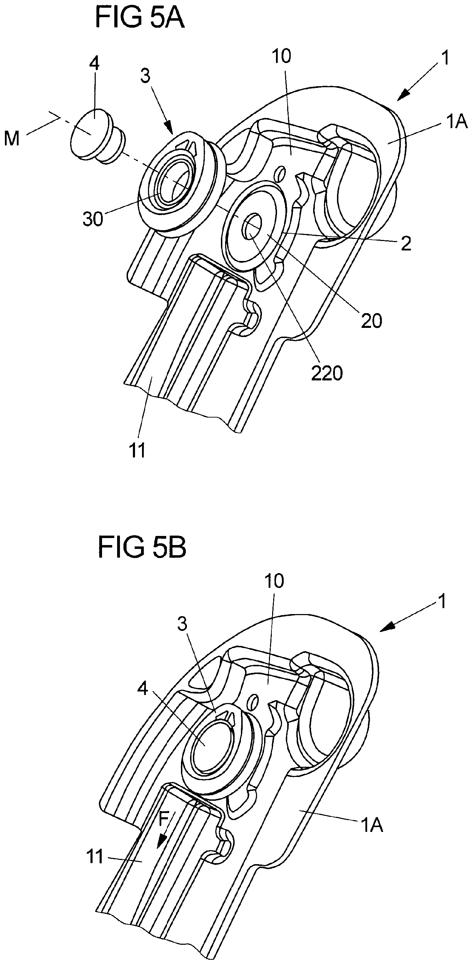

For fastening the pulley 3 to the pulley bracket 2 the base portion 20 comprises a fastening hole 200. In this fastening hold 200 a fastening element in the form of a rivet 4 may engage in order to fix the pulley 3 to the pulley bracket 2 and to mount the pulley 3 rotatably at the pulley bracket 2 as shown in greater detail in FIGS 5A and 5B.

For holding the metal pulley bracket 2 irremovably at the guide rail 1 and integrating the pulley bracket 2 to the guide rail 1 portions of the pulley bracket 2 extending radially from the base portion 20 with respect to a centre of the opening 100 and the fastening hole 200 are embedded in the plastic material of the guide rail 1. During manufacture of the guide rail 1 those portions have been (over-) molded by melted plastic material when molding the guide rail 1.

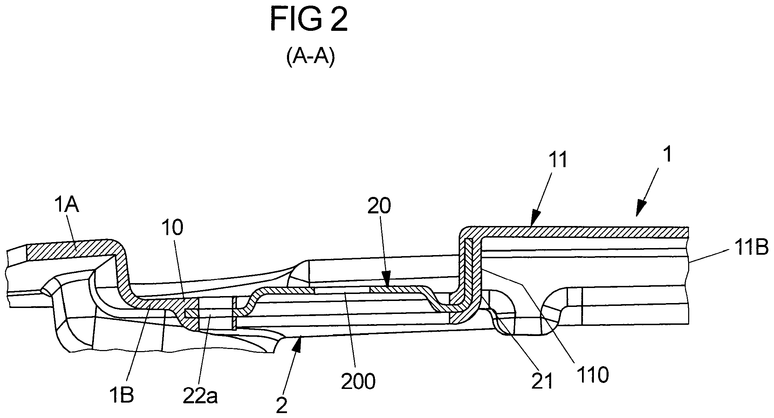

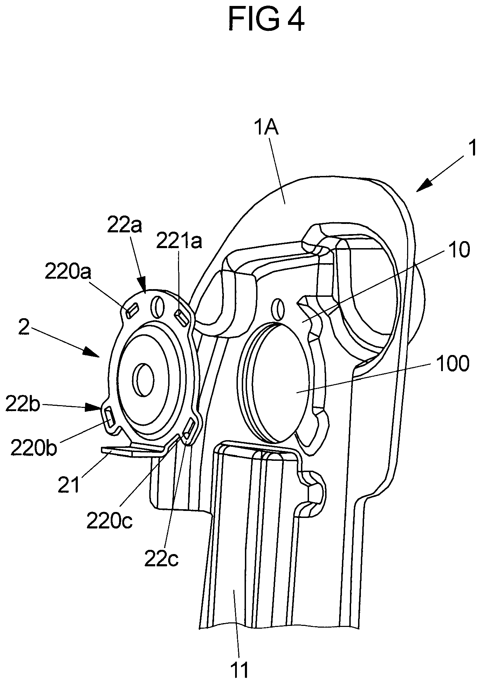

The molded portions of the metal pulley bracket 2 comprise a tap portion 21 and several web portions 22a, 22b and 22c shown in the greater detail in the cross-sectional view of FIG 2 as well as in the exploded view of FIG 4.

The tab portion 21 projects substantially perpendicular to the base portion 20 and thus substantially parallel to the mounting/pivot axis M along which the pulley 3 is to be arranged and fixed at the pulley bracket 2 and about which the pulley 3 is later rotatable at the pulley bracket 2. The tab portion 21 of the pulley bracket 2 is embedded in the plastic material of an elongated support structure 11 of the guide rail 1. The support structure 11 extends along the direction R substantially parallel to the direction of extent of the guide rail 1 and pointing away from the mounting region 10 at the upper end of the guide rail 1 (towards a mounting region at the other, lower end of the guide rail 1, where the other pulley 3.3 is mounted).

The tab portion 21 is spaced from the fastening hole 200 through which the rivet 4 engages for rotatably mounting the pulley 3. The tab portion 21 is - viewed from the fastening hole 200 - located in a direction of a resulting force F which, in use of the window lifter assembly A, is exerted on the pulley 3 upon guiding the cable C from the first direction towards the second direction when adjusting the vehicle window. Via the projecting tab portion 21 this force F may be directly transferred to the support structure 11 which, at the front side 1A, also projects from a base plane of the guide rail 1 and which substantially extends along the direction R of the force F.

The further radially projecting web portions 22a, 22b and 22c which are circumferentially spaced from each other are in each case embedded in the plastic material of the guide rail 1 as well. Each one of the web portions 22a, 22b and 22c comprises at least one connecting opening in the form of a slot 220a, 221a, 220b or 220c. In the embodiment shown in FIG 2 a first elongated web portion 22a comprises two slots 220a, 221a, whereas additional second and third web portions 22b, 22c spaced from the first web portion 22a (which is located in a circumferential direction between the second and third web portions 22b and 22c) respectively just comprise one slot 220b or 220c.

During manufacture of the guide rail 1 melted plastic material is allowed to flow through the slots 220a, 221a, 220b and 220c in the web portions 22a, 22b and 22c of the metal pulley bracket 2 so that the slots 220a, 221a, 220b and 220c are filled with the plastic material and an outer edge section of each one of the web portions 22a, 22b and 22c bordering the corresponding slot 220a, 221a, 220b or 220c is enclosed by the plastic material of the molded guide rail 1. Thereby, the metal pulley bracket 2 forms an insert which is held at the guide rail 1 by several form-fit connections and the metal pulley bracket 2 is an integral part of the guide rail 1 which cannot be removed therefrom without breaking and thus destroying the guide rail 1 at the mounting region 10. The guide rail 1 with the at least one insert in the form of the metal pulley bracket 2 may thus be prefabricated in a molding process so that just the pulley 3 and the rivet 4 have later to be mounted to the integral pulley bracket 2 for rotatably mounting the pulley 3 at the guide rail 1.

As you can in particular be seen from FIGS 1B, 2 and 3, the support structure 11 projecting at the front side 1A of the guide rail 1 defines an elongated recessed portion 11B at the opposite rear side 1B of the guide rail 1. In order to additionally support the pulley bracket 2 at the rear side 1B and to increase the stiffness in the area of the mounting region 10 at the rear side 1B a stiffening rib structure 12 is formed in the recessed portion 11B. The rib structure 12 comprises several ribs 120 spaced apart from each other. Some of the ribs 120 are arranged substantially in parallel to each other and extend along the longitudinal direction R and thus in the direction of the resulting force F. The rib structure 12 extends from an outer wall 110 of the support structure 11 and is integrally formed therewith by the plastic material. The (with respect to the base portion 20) axially and radially projecting tab portion 21 of the metal pulley bracket 2 is embedded in a portion of the support structure 11 defining this outer wall 110. Hence, the ribs 120 of the stiffening rib structure 12 act as an additional support for the pulley bracket 2 in the area of the tab portion 21.

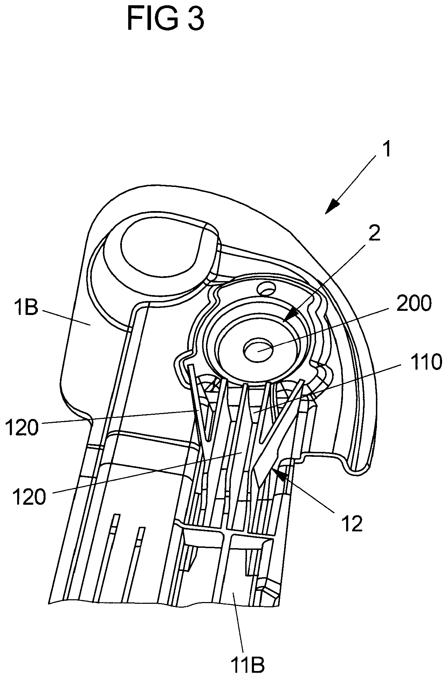

As can also be seen from FIG 3, the rib structure 12 also comprises ribs 120 which extend under an angle with respect to a neighbouring rib 120 of the rib structure 12 thereby forming a V-shaped stiffening structure.

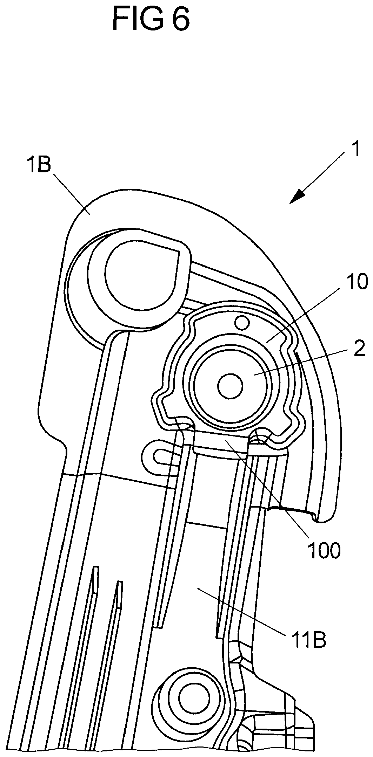

Depending on the level of the resulting force F to be absorbed by the support structure 11 in use of the window lifter assembly A an additional rib structure 12 might not be necessary. FIG 6 shows a corresponding variant in which a stiffening rib structure 12 is omitted in the recessed portion 11B at the rear side 1B of the guide rail 1.

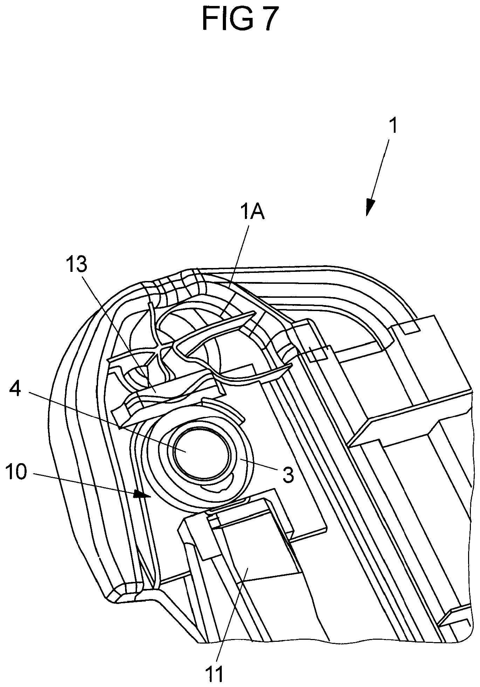

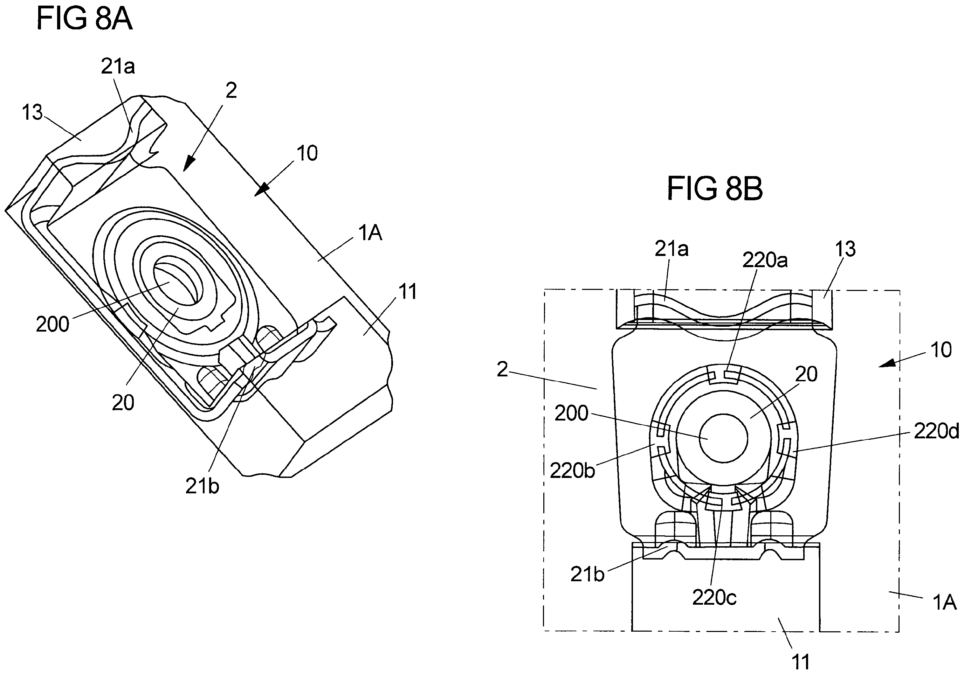

FIGS 7 and 8A to 8B show another embodiment in which the metal pulley bracket 2 comprises just to tab portions 21a and 21b projecting from the base portion 20 of the pulley bracket 2 both radially and axially. The tab portions 21a and 21b face each other and are thus for example arranged above and below the fasting hole 200 at the pulley bracket 2. Each one of the projecting tab portions 21a and 21b is embedded in and is enclosed by plastic material of two opposing support structures 11 and 13 of the guide rail 1. The support structure 11 is functionally identical to the support structure 11 of the embodiments of FIGS 1A to 5B and 6. The additional support structure 13 also projects from the base plane of the guide rail 1 so that the guiding channel 31 of the pulley 3 is at least partially covered by the support structure 13. Thereby, the support structure 13 may secure the cable C at the pulley 3 after the window lifter assembly A has been duly mounted so that removal of the cable C from the pulley 3 is hindered by the support structure 13.

In contrast to the embodiments of FIGS 1A to 5B and 6 the metal pulley bracket 2 of FIGS 7 to 8B comprises several slots 220a to 220d which are equally disposed around the fastening hole 200. Through these slots 220a to 220d melted plastic material is allowed to flow during the molding process for molding the guide rail 1. The plastic material of the guide rail 1 reaching through the slots 220a to 220d thus again irremovably fixes the metal pulley bracket 2 within the guide rail 1 which metal pulley bracket 2 provides for an reinforced mounting region 10 for the pulley 3.

Although a carrier member in the form of a separately manufactured guide rail 1 is shown in FIGS 1A to 8B it shall be clear that the claimed solution is not limited in this regard. In particular, the guide rail 1 may be an integral part of component carrier of the window lifter assembly A which carries further functional components of the window lifter assembly A or of a vehicle door, like an electric drive motor of the drive unit D or a loudspeaker.

Further, it is to be noted that, in contrast to the mounting of the pulley 3 shown in FIGS 5A to 5B and 7, fastening elements providing the rotational axis M for the pulley 3 and securing the pulley 3 at the pulley bracket 2 may also be used to fix a separately manufactured guide rail 1 at a carrier component, for example, at a door panel or a component carrier.

The foregoing description of the embodiments has been provided for purposes of illustration and description. It is not intended to limit the disclosure. Individual elements or features of a particular embodiment are generally not limited to that particular embodiment, but, where applicable, are interchangeable and can be implemented in another embodiment, even if not specifically shown or described. The same elements may also be varied in one or more ways. Such variations are not to be regarded as a departure from the disclosure, and all such modifications are intended to be included within the scope of the disclosure.

## Claims

1. A window lifter assembly for adjusting a vehicle window, comprising:
- a flexible traction element (C) for transmitting an adjustment force to adjust the vehicle window;
- a guiding element (3, 3.1, 3.2, 3.3) at which the flexible traction element (C) is guided from a first direction towards a second direction;
- a carrier member (1, 1.1) made of plastic material and comprising a mounting region (10) for the guiding element (3, 3.1, 3.2, 3.3); and
- a reinforcement member (2) made of a different material than the carrier member, which reinforcement member (2) carries the guiding element (3, 3.1, 3.2, 3.3) and is at least partially embedded in the plastic material of the carrier member (1, 1.1) at the mounting region (10),
**characterized in that**
the reinforcement member (2) comprises a base portion (20) to which the guiding element (3, 3.1, 3.2, 3.3) is fixed and which is located in a carrier opening (100) in the carrier member (1, 1.1).

2. The window lifter assembly of claim 1, wherein base portion (20) comprises a fastening hole (200) for fixing the guiding element (3, 3.1, 3.2, 3.3) to the reinforcement member (2).

3. The window lifter assembly of claim 1, wherein the reinforcement member (2) comprises at least one portion (22a, 22b, 22c) projecting from the base portion (20) in a direction radial to a centre of the carrier opening (100) and being embedded in the plastic material of the carrier member (1, 1.1).

4. The window lifter assembly of claim 3, wherein the at least one portion comprises (22a, 22b, 22c) at least one connecting (220a, 221a, 220b, 220c) opening through which the plastic material of the carrier member (1, 1.1) extends or the reinforcement member (2) comprises at least two portions (22a, 22b, 22c) projecting in different directions radial to the centre of the carrier opening (100).

5. The window lifter assembly of claim 1, wherein the reinforcement member (2) comprises a portion (21, 21a, 21b) extending substantially perpendicular to a resulting force which, in use of the window lifter assembly (A), is exerted on the guiding element (3, 3.1, 3.2, 3.2) upon guiding the flexible traction element (C) from the first to the second direction.

6. The window lifter assembly of claim 1, wherein a portion of the reinforcement member (2) is embedded in the plastic material of a support structure (11) of the carrier member (1, 1.1).

7. The window lifter assembly of claim 6, wherein the support structure (11) of the carrier member (1, 1.1) extends along a longitudinal direction (R) in which, in use of the window lifter assembly (A), a resulting force is exerted on the guiding element (3, 3.1, 3.2, 3.2) upon guiding the flexible traction element (C) from the first direction towards the second direction.

8. The window lifter assembly of claim 6, wherein the support structure (11) projects at a first side (1A) of the carrier member (1, 1.1) and defines a recessed portion (11B) at a second side (1B) of the carrier member (1, 1.1).

9. The window lifter assembly of claim 1, wherein the reinforcement member (2) is made of metal or the reinforcement member is a metal bracket (2).

10. The window lifter assembly of claim 1, wherein the guiding element is a pulley (3, 3.1, 3.2, 3.3) rotatably mounted to the reinforcement member (2).

11. The window lifter assembly of claim 1, wherein the carrier member is at least one of a guide rail (1, 1.1) and a component carrier of the window lifter assembly (A).

12. A method for manufacturing a window lifter assembly (A) for adjusting a vehicle window, comprising at least the following steps:
- molding a carrier member (1, 1.1) of the window lifter assembly (A) from plastic material, the carrier member (1, 1.1) comprising a mounting region (10) for a guiding element (3, 3.1, 3.2, 3.3) of the window lifter assembly (A) at which a flexible traction element (C) of the window lifter assembly (A) is to be guided from a first direction towards a second direction; and
- at least partially embedding a reinforcement member (2), made of a different material than the plastic material of the carrier member (1, 1.1), in the plastic material when molding the carrier member (1, 1.1), the reinforcement member (2) comprising a base portion (20) to which the guiding element (3, 3.1, 3.2, 3.3) is to be fixed and which is to be located in a carrier opening (100) in the carrier member (1, 1.1),
wherein the reinforcement member (2) is arranged in a mold into which melted plastic material is inserted for molding the carrier member (1, 1.1) and the reinforcement member (2) comprises at least one connecting opening (220a, 221a, 220b, 220c, 220d) through which melted plastic material is allowed to flow.

13. The method of claim 12, further comprising fixing the guiding element (3, 3.1, 3.2, 3.3) to the reinforcement member (2) being at least partially embedded in the plastic material of the molded carrier member (1, 1.1).

## Patentansprüche

1. Fensterheberanordnung zum Verstellen eines Fahrzeugfensters, aufweisend:
- ein flexibles Zugelement (C) zum Übertragen einer Verstellkraft zum Verstellen des Fahrzeugfensters;
- ein Führungselement (3, 3.1, 3.2, 3.3), an dem das flexible Zugelement (C) von einer ersten Richtung in eine zweite Richtung geführt wird;
- ein Trägerelement (1, 1.1) aus Kunststoff und mit einem Befestigungsbereich (10) für das Führungselement (3, 3.1, 3.2, 3.3); und
- ein Verstärkungselement (2), das aus einem anderen Material besteht als das Trägerelement, wobei das Verstärkungselement (2) das Führungselement (3, 3.1, 3.2, 3.3) trägt und in dem Befestigungsbereich (10) wenigstens teilweise in den Kunststoff des Trägerelements (1, 1.1) eingebettet ist,
**dadurch gekennzeichnet, dass**
das Verstärkungselement (2) einen Basisabschnitt (20) umfasst, an dem das Führungselement (3, 3.1, 3.2, 3.3) befestigt ist und der in einer Trägeröffnung (100) in dem Trägerelement (1, 1.1) angeordnet ist.

2. Fensterheberanordnung nach Anspruch 1, wobei der Basisabschnitt (20) ein Befestigungsloch (200) zum Befestigen des Führungselements (3, 3.1, 3.2, 3.3) an dem Verstärkungselement (2) aufweist.

3. Fensterheberanordnung nach Anspruch 1, wobei das Verstärkungselement (2) mindestens einen Abschnitt (22a, 22b, 22c) aufweist, der von dem Basisabschnitt (20) in einer zum Mittelpunkt der Trägeröffnung (100) radialen Richtung vorspringt und in den Kunststoff des Trägerelements (1, 1.1) eingebettet ist.

4. Fensterheberanordnung nach Anspruch 3, wobei der mindestens eine Abschnitt (22a, 22b, 22c) mindestens eine Verbindungsöffnung (220a, 221a, 220b, 220c) aufweist, durch die sich der Kunststoff des Trägerelements (1, 1.1) erstreckt, oder wobei das Verstärkungselement (2) mindestens zwei Abschnitte (22a, 22b, 22c) aufweist, die in unterschiedlichen Richtungen radial zum Mittelpunkt der Trägeröffnung (100) vorspringen.

5. Fensterheberanordnung nach Anspruch 1, wobei das Verstärkungselement (2) einen Abschnitt (21, 21a, 21b) aufweist, der im Wesentlichen senkrecht zu einer resultierenden Kraft verläuft, die, beim Gebrauch der Fensterheberanordnung (A), beim Führen des flexiblen Zugelementes (C) von der ersten Richtung in die zweite Richtung auf das Führungselement (3, 3.1, 3.2, 3.3) ausgeübt wird.

6. Fensterheberanordnung nach Anspruch 1, wobei ein Abschnitt des Verstärkungselements (2) in den Kunststoff einer Tragstruktur (11) des Trägerelements (1, 1.1) eingebettet ist.

7. Fensterheberanordnung nach Anspruch 6, wobei sich die Tragstruktur (11) des Trägerelements (1, 1.1) entlang einer Längsrichtung (R) erstreckt, in der, beim Gebrauch der Fensterheberanordnung (A), eine resultierende Kraft beim Führen des flexiblen Zugelementes (C) von der ersten Richtung in die zweite Richtung auf das Führungselement (3, 3.1, 3.2) ausgeübt wird.

8. Fensterheberanordnung nach Anspruch 6, wobei die Tragstruktur (11) auf einer ersten Seite (1A) des Trägerelements (1, 1.1) vorspringt und einen ausgesparten Abschnitt (11B) auf einer zweiten Seite (1B) des Trägerelements (1, 1.1) definiert.

9. Fensterheberanordnung nach Anspruch 1, wobei das Verstärkungselement (2) aus Metall besteht oder wobei das Verstärkungselement ein Metallbügel (2) ist.

10. Fensterheberanordnung nach Anspruch 1, wobei das Führungselement eine Riemenscheibe (3, 3.1, 3.2, 3.3) ist, die drehbar an dem Verstärkungselement (2) angebracht ist.

11. Fensterheberanordnung nach Anspruch 1, wobei das Trägerelement mindestens eines von einer Führungsschiene (1, 1.1) und einem Bauteilträger der Fensterheberanordnung (A) ist.

12. Verfahren zur Herstellung einer Fensterheberanordnung (A) zum Verstellen eines Fahrzeugfensters, das mindestens die folgenden Schritte aufweist:
- Formen eines Trägerelements (1, 1.1) der Fensterheberanordnung (A) aus Kunststoff, wobei das Trägerelement (1, 1.1) einen Befestigungsbereich (10) für ein Führungselement (3, 3.1, 3.2, 3.3) der Fensterheberanordnung (A) aufweist, an dem ein flexibles Zugelement (C) der Fensterheberanordnung (A) von einer ersten Richtung in eine zweite Richtung zu führen ist; und
- wenigstens teilweise Einbetten eines Verstärkungselements (2), das aus einem von dem Kunststoff des Trägerelements (1, 1.1) verschiedenen Material besteht, in den Kunststoff beim Formen des Trägerelements (1, 1.1), wobei das Verstärkungselement (2) einen Basisabschnitt (20) aufweist, an dem das Führungselement (3, 3.1, 3.2, 3.3) zu befestigen ist und der in einer Trägeröffnung (100) in dem Trägerelement (1, 1.1) anzuordnen ist,
wobei das Verstärkungselement (2) in einer Form angeordnet ist, in die geschmolzener Kunststoff zum Formen des Trägerelements (1, 1.1) eingebracht wird, und wobei das Verstärkungselement (2) mindestens eine Verbindungsöffnung (220a, 221a, 220b, 220c, 220d) aufweist, durch die geschmolzener Kunststoff fließen kann.

13. Verfahren nach Anspruch 12, bei dem ferner das Führungselement (3, 3.1, 3.2, 3.3) an dem Verstärkungselement (2) befestigt wird, das wenigstens teilweise in den Kunststoff des geformten Trägerelements (1, 1.1) eingebettet ist.

## Revendications

1. Ensemble lève-vitre pour régler une vitre de véhicule, comprenant :
- un élément de traction flexible (C) pour transmettre une force de réglage pour régler la vitre de véhicule ;
- un élément de guidage (3, 3.1, 3.2, 3.3) au niveau duquel l'élément de traction flexible (C) est guidé d'une première direction vers une deuxième direction ;
- un membre de support (1, 1.1) réalisé en matière plastique et comprenant une région de montage (10) pour l'élément de guidage (3, 3.1, 3.2, 3.3) ; et
- un membre de renforcement (2) réalisé en une matière différente de celle de l'élément de support,
lequel membre de renforcement (2) porte le membre de guidage (3, 3.1, 3.2, 3.3) et est au moins partiellement intégré dans la matière plastique de l'élément de support (1, 1.1) au niveau de la région de montage (10),
**caractérisé en ce que**
le membre de renforcement (2) comprend une portion de base (20) à laquelle l'élément de guidage (3, 3.1, 3.2, 3.3) est fixé et qui est localisée dans une ouverture de support (100) dans le membre de support (1, 1.1).

2. Ensemble lève-vitre de la revendication 1, dans lequel le membre de base (20) comprend un trou de fixation (200) pour fixer l'élément de guidage (3, 3.1, 3.2, 3.3) au membre de renforcement (2).

3. Ensemble lève-vitre de la revendication 1, dans lequel le membre de renforcement (2) comprend au moins une partie (22a, 22b, 22c) faisant saillie de la portion de base (20) dans une direction radiale par rapport au centre de l'ouverture de support (100) et étant intégrée dans la matière plastique de l'élément de support (1, 1.1).

4. Ensemble lève-vitre de la revendication 3, dans lequel l'au moins une portion (22a, 22b, 22c) comprend au moins une ouverture de raccordement (220a, 221a, 220b, 220c) à travers laquelle s'étend la matière plastique de l'élément de support (1, 1.1) ou le membre de renforcement (2) comprend au moins deux portions (22a, 22b, 22c) faisant saillie dans des directions radiales différentes par rapport au centre de l'ouverture de support (100).

5. Ensemble lève-vitre de la revendication 1, dans lequel le membre de renforcement (2) comprend une partie (21, 21a, 21b) s'étendant essentiellement perpendiculairement à une force résultante qui, lors de l'utilisation de l'ensemble lève-vitre (A), est exercée sur l'élément de guidage (3, 3.1, 3.2, 3.2) lors du guidage de l'élément de traction flexible (C) de la première direction vers la deuxième direction.

6. Ensemble lève-vitre de la revendication 1, dans lequel une partie de le membre de renforcement (2) est intégrée dans la matière plastique d'une structure de soutien (11) de l'élément de support (1, 1.1).

7. Ensemble lève-vitre de la revendication 6, dans lequel la structure de soutien (11) de l'élément de support (1, 1.1) s'étend le long d'une direction longitudinale (R) dans laquelle, lors de l'utilisation de l'ensemble lève-vitre (A), une force résultante est exercée sur l'élément de guidage (3, 3.1, 3.2, 3.2) lors du guidage de l'élément de traction flexible (C) de la première direction vers la deuxième direction.

8. Ensemble lève-vitre de la revendication 6, dans lequel la structure de soutien (11) fait saillie au niveau d'un premier côté (1A) de l'élément de support (1, 1.1) et définit une partie en évidement (11B) au niveau d'un deuxième côté (1B) de l'élément de support (1, 1.1).

9. Ensemble lève-vitre de la revendication 1, dans lequel le membre de renforcement (2) est réalisé en métal ou le membre de renforcement est un support métallique (2).

10. Ensemble lève-vitre de la revendication 1, dans lequel l'élément de guidage est une poulie (3, 3.1, 3.2, 3.3) montée en rotation sur le membre de renforcement (2).

11. Ensemble lève-vitre de la revendication 1, dans lequel l'élément de support est au moins l'un d'un rail de guidage (1, 1.1) et d'un support de composant de l'ensemble lève-vitre (A).

12. Procédé de fabrication d'un ensemble lève-vitre (A) pour régler une vitre de véhicule, comprenant au moins les étapes suivantes:
- moulage d'un élément de support (1, 1.1) de l'ensemble lève-vitre (A) à partir d'une matière plastique, l'élément de support (1, 1.1) comprenant une région de montage (10) pour un élément de guidage (3, 3.1, 3.2, 3.3) de l'ensemble lève-vitre (A) au niveau duquel un élément de traction flexible (C) de l'ensemble lève-vitre (A) doit être guidé d'une première direction vers une deuxième direction ; et
- intégration au moins partielle d'un élément de renforcement (2), réalisé en une matière différente de celle de la matière plastique de l'élément de support (1, 1.1), dans la matière plastique lors du moulage de l'élément de support (1, 1.1), le membre de renforcement (2) comprenant une partie de base (20) à laquelle l'élément de guidage (3, 3.1, 3.2, 3.3) doit être fixé et qui doit être située dans une ouverture de support (100) dans l'élément de support (1, 1.1),
dans lequel le membre de renforcement (2) est agencé dans un moule dans lequel une matière plastique fondue est insérée pour mouler l'élément de support (1, 1.1) et le membre de renforcement (2) comprend au moins une ouverture de raccordement (220a, 221a, 220b, 220c, 220d) à travers laquelle la matière plastique fondue peut s'écouler.

13. Procédé de la revendication 12, comprenant en outre la fixation de l'élément de guidage (3, 3.1, 3.2, 3.3) à le membre de renforcement (2) qui est au moins partiellement intégré dans la matière plastique de l'élément de support moulé (1, 1.1).
